Europäisches Patentamt

(19) European Patent Office

Office européen des brevets

(11) Veröffentlichungsnummer: **0 223 952**
**B1**

(12) **EUROPÄISCHE PATENTSCHRIFT**

(45) Veröffentlichungstag der Patentschrift:
28.03.90

(21) Anmeldenummer: 86112854.4

(22) Anmeldetag: 17.09.86

(51) Int. Cl.⁴: **G11B 15/665**

(54) Einrichtung für ein Video-Magnetbandgerät zur bedarfsweisen Mitnahme von Steuerelementen.

(30) Priorität: 28.11.85 DE 3542049

(43) Veröffentlichungstag der Anmeldung:
03.06.87 Patentblatt 87/23

(45) Bekanntmachung des Hinweises auf die Patenterteilung:
28.03.90 Patentblatt 90/13

(84) Benannte Vertragsstaaten:
AT CH DE FR GB IT LI

(56) Entgegenhaltungen:
EP-A- 0 045 326
EP-A- 0 142 565
EP-A- 0 162 497

(73) Patentinhaber: GRUNDIG E.M.V. Elektro-Mechanische
Versuchsanstalt Max Grundig holländ. Stiftung & Co.
KG., Kurgartenstrasse 37, D-8510 Fürth/Bay.(DE)

(72) Erfinder: Schmidt, Erhardt, Wickenstrasse 46,
D-8510 Fürth/Bayern(DE)

## Beschreibung

Die Erfindung bezieht sich auf eine Einrichtung an einem Video-Magnetbandgerät zur bedarfsweisen Mitnahme, Aussetzen oder Umschalten von Steuerelementen durch ein Antriebselement gemäß dem Oberbegriff des Anspruchs 1.

Es sind Einrichtungen an Video-Magnetbandgeräten bekannt (z.B. EP-A 0 045 326), die das Magnetband aus einer Bandkassette mit zwei Bandwickelspulen herausziehen und in Schräglage um einen Teil einer rotierenden Kopftrommel anlegen, wobei der Kopftrommel wenigstens ein Video-Magnetkopf zugeordnet ist. Zur Führung des Magnetbandes sind bei Bandführungseinrichtungen in Videogeräten die erforderlichen Bandführungslemente wenigstens teilweise auf einem ringförmigen Träger angeordnet. Der Träger ist um die Kopftrommel gelegt und in beiden Drehrichtungen antreibbar. Das Magnetband wird in Form einer Schlaufe um die Kopftrommel gezogen. Hierzu sind mehrere Bandführungselemente bzw. Bandführungsstifte erforderlich, damit vermieden wird, daß das Magnetband im Schlaufenbereich und im übrigen Führungsbereich übereinander zu liegen kommt. Die verschiedenen Bandführungsstifte nehmen daher während des Bandeinzugvorganges im Bereich der Kopftrommel zwischen der Ausgangslage und der Endlage verschiedene Positionen zueinander ein. Somit können nicht alle Bandführungsstifte einem Träger fest zugeordnet werden. Es ist daher üblich, daß Bandführungsstifte auf mindestens zwei der Kopftrommel zugeordnete Träger angeordnet sind, und die Träger unabhängig und zeitlich gesteuert in verschiedene Endlagen gedreht werden können. Zusätzlich zu den ringförmigen Trägern sind Bandführungselemente auf eigenen Schwenkhebeln angeordnet und im Gerät getrennt steuerbar. Der getrennte Antrieb dieser Schwenkhebel ist aufwendig und bedarf einer genauen zeitlich mit der Bewegung des Trägers abgestimmten Steuerung.

Die der Erfindung zugrundeliegende Aufgabe besteht darin, eine preiswerte Einrichtung zur bedarfsweisen Mitnahme von Steuerelementen, z. B. Bandführungselementen, durch ein bereits vorhandenes Antriebselement zu schaffen, bei der das Steuerelement in ganz bestimmt vorgegebener Folge mit dem Antriebselement gekoppelt wird.

Diese Aufgabe wird durch die kennzeichnenden Merkmale im Anspruch 1 gelöst.

Die Unteransprüche zeigen Ausgestaltungen der Erfindung.

Die Erfindung wird nachfolgend anhand der Zeichnungen erläutert.

Fig. 1 ist eine vereinfachte Draufsicht auf eine Kopftrommel eines Video-Magnetbandgerätes mit einer Steuerscheibe zur Betätigung von Bandführungselementen sowie einer Kassette mit einem eingelegten Magnetband.

Fig. 2 ist eine Ansicht ähnlich der Fig. 1, jedoch mit aus der Kassette herausgezogenem und teilweise um die Kopftrommel geführtem Magnetband,

Fig. 3 ist eine Teilansicht der Fig. 1, wobei der Eingriff eines Triebrades mit einem Stellteil zur Axialverschiebung in eine Steuerscheibe vergrößert dargestellt ist.

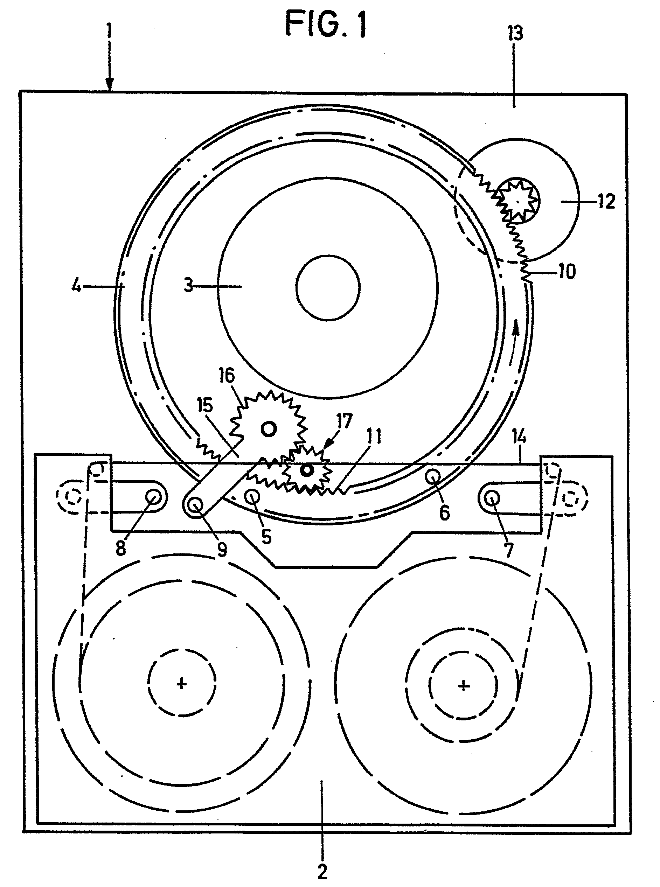

Die Figur 1 zeigt in vereinfachter Darstellung eine Draufsicht auf einen Teil eines Video-Magnetbandgerätes 1, mit einer angedeuteten Magnetbandkassette 2, einer Kopftrommel 3 mit zugeordneter ringförmiger Steuerscheibe 4 sowie verschiedener Bandführungselemente in Form von Bandführungsstiften 5 bis 9. Die Steuerscheibe 4 weist einen äußeren und inneren Zahnkranz 10 und 11 auf, und ist durch einen Motor 12, der in den äußeren Zahnkranz eingreift, in beiden Drehrichtungen antreibbar. Alle Teile sind direkt oder über Steuerelemente auf einem Gerätechassis 13 montiert. Nach Auflegen einer Kassette 2 auf das Gerät 1 wird das Magnetband 14, das sich in der Kassette befindet, von den Bandführungsstiften hinterfaßt und kann von diesen aus der Kassette herausgezogen werden. Die Bandführungselemente sind vorzugsweise als senkrechtstehende Bandführungsstifte ausgeführt, wobei die Bandführungsstifte 5 und 6 auf der Steuerscheibe 4 fest montiert sind, und die Führungsstifte 7 und 8 sind je auf einem Schwenkhebel befestigt. Ebenso befindet sich der Bandführungsstift 9 auf einem Schwenkhebel 15, der im Bereich der Lagerstelle mit einem Zahnkranz 16 versehen ist. Der Zahnkranz 16 ist in Eingriff zu einem Triebrad 17, das sich bedarfsweise in Eingriff zur Steuerscheibe 4 befindet. Das Triebrad ist axial verschiebbar auf dem Chassis gelagert und kann somit durch Axialverschiebung in und außer Eingriff zur Steuerscheibe 4 gelangen. Außerhalb des Eingriffs wird das Triebrad in einer vorgegebenen Lage zur Steuerscheibe festgehalten. Hierzu ist in einfachster Weise ein nicht näher dargestellter Fixierstift auf der Steuerscheibe angebracht. Über ein Stellglied am Triebrad wird deren Axialverschiebung vorgenommen. Der Bandführungsstift 9 kann somit durch die sich drehende Steuerscheibe bedarfsweise verschwenkt, und in einer bestimmten Lage im Gerät gehalten werden, ohne daß die Steuerscheibe anzuhalten ist.

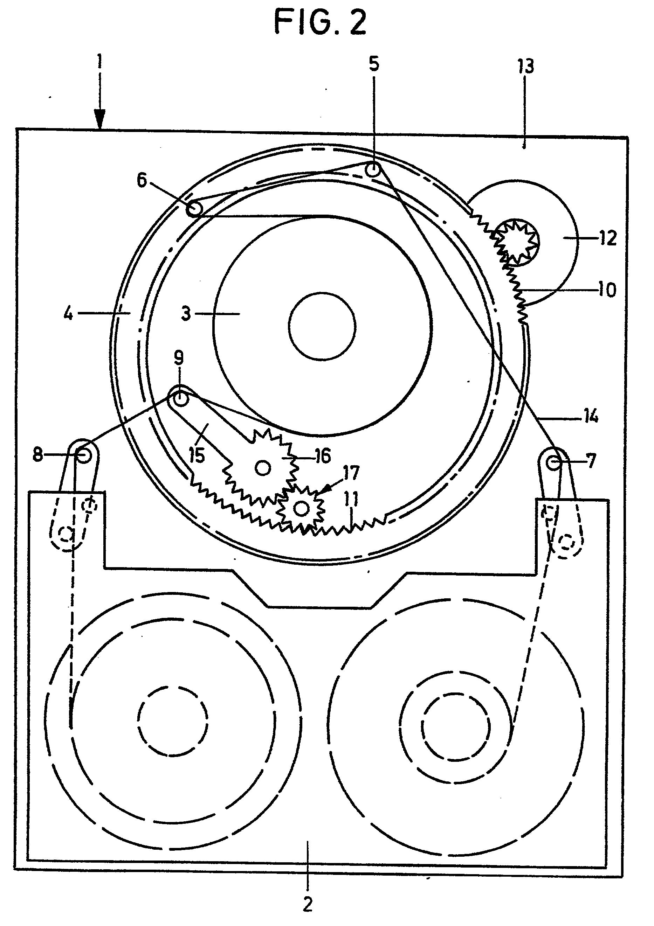

Die Figur 2 zeigt die nach dem Verdrehen der Steuerscheibe veränderte Lage der Bandführungsstifte 5 bis 9. Durch die Bewegung der Bandführungsstifte wird das Magnetband 14 aus der Kassette herausgezogen und in bekannter Weise um die Kopftrommel 3 gelegt sowie in eine Position gebracht, in der das Band noch von anderen Signalwandlern abgetastet werden kann. Die den Bandführungsstiften 5 und 8 zugeordneten Schwenkhebel können durch die Steuerscheibe in gleicher Weise angetrieben werden wie der Schwenkhebel 15, auf dem der Bandführungsstift 9 aufsitzt.

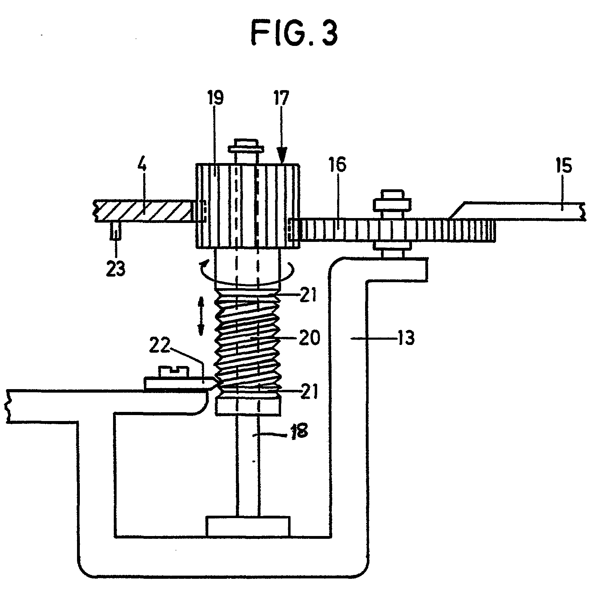

Die Figur 3 zeigt, wie das Triebrad 17 axialverschiebbar auf einer Achse 18 gelagert ist und in Eingriff zur Steuerscheibe 4 und dem Zahnkranz 16 des Schwenkhebels 15 steht. Die Teile sind auf dem Chassis 13 gelagert. Das Triebrad 17, das in Pfeilrichtung axialverschiebbar ist, weist unterhalb dem Verzahnungsbereich ein Stellglied 20 auf, das in der dargestellten Figur als Gewindeschaft ausgeführt ist. Der Gewindeschaft weist ferner beidseitig Führungsnuten 21 auf, in die und in den Gewindeschaft ein Führungsteil 22 eingreift. Über das Stellglied 20 wird das Triebrad in oder außer Eingriff zur Steuerscheibe 4 gebracht und ebenfalls in einer bestimmten Lage gehalten. Ist das Triebrad durch Axialverschiebung außer Eingriff zur Steuerscheibe 4 gebracht und in dieser Lage fixiert, so wird es in entgegengesetzter Drehrichtung der Steuerscheibe durch einen auf dieser aufgesetzten Mitnahmestift 23 erneut in Eingriff gebracht.

## Patentansprüche

1. Einrichtung für ein Video-Magnetbandgerät zum bedarfsweisen Mitnehmen, Aussetzen oder Umschalten von Steuerelementen die Bandführungselemente (5, 6, 9) enthalten, wobei die Steuerelemente durch ein Antriebselement, das aus einer ringförmig um die Kopftrommel drehbar angeordneten Steuerscheibe (4) besteht, von einem Antriebsmotor (12) in beiden Drehrichtungen antreibbar ist, und wobei erste Bandführungselemente (5, 6) der genannten Steuerelemente auf dem Antriebselement angeordnet sind, und das Magnetband mittels der Bandführungselemente aus einer Kassette herausgezogen und in Schrägspurführung teilweise um eine rotierende Kopftrommel mit zugeordneten Magnetköpfen gelegt wird, dadurch gekennzeichnet, daß die Einrichtung wenigstens ein Triebrad (17), das in die innen- oder außenverzahnte Steuerscheibe (4) eingreift, aufweist, daß das Triebrad durch Axialverschiebung in und außer Eingriff zur Steuerscheibe gelangt und außerhalb des Eingriffs in einer vorgegebenen Lage zur Steuerscheibe gehalten ist, daß sich das Triebrad direkt oder über wenigstens ein Zwischenrad in Eingriff zu einem Schwenkhebel (15), auf dem wenigstens ein weiteres (9) der Steuerelemente angeordnet ist, befindet und daß das Triebrad zur Axialverschiebung ein Stellglied (20) aufweist zur Hervorrufung der Axialverschiebung des Triebrades durch Drehung der Steuerscheibe selbst, und daß ein mit der Steuerscheibe gekoppeltes Mittel (23) vorgesehen ist, um das Triebrad aus der vorgegebenen Lage heraus in Eingriff mit der Steuerscheibe zu bringen.

2. Einrichtung nach Anspruch 1, dadurch gekennzeichnet, daß das Stellglied (20) des Triebrades als Gewindeschaft ausgebildet ist.

3. Einrichtung nach den Ansprüchen 1 und 2, dadurch gekennzeichnt, daß der Gewindeschaft beidseitig am Ende des Gewindes eine radiale Führungsnut (21) aufweist.

4. Einrichtung nach den Ansprüchen 1 bis 3, dadurch gekennzeichnet, daß in das Stellglied (20) ein mit dem Gerätechassis verbundenes Führungsteil (22) eingreift.

## Claims

1. Arrangement for a magnetic-tape video recorder for the driving, disengaging or switching, as required, of control elements which contain tape guide elements (5, 6, 9), the control elements being drivable by a drive motor (12) in both directions of rotation via a drive element which comprises a disc cam (4) arranged so as to be rotatable in the form of a ring around the head drum, and first tape guide elements (5, 6) of the said control elements being arranged on the drive element, and the magnetic tape being pulled out of a cassette by means of the tape guide elements and laid in helical scan orientation partially around a rotating head drum having associated magnetic heads, characterized in that the arrangement has at least one driving gear (17), which engages in the internally or externally toothed disc cam (4), in that the driving gear comes into and out of engagement with the disc cam by axial displacement and, when out of engagement, is held in a predetermined position relative to the disc cam, in that the driving gear is in engagement, directly or via at least one idler gear, with a pivoted lever (15) on which is arranged at least one more of the control elements (9), and in that, for axial displacement, the driving gear has an actuator (20) for bringing about the axial displacement of the driving gear by rotation of the disc cam itself, and in that a means (23) coupled to the disc cam is provided in order to bring the driving gear out of the predetermined position and into engagement with the disc cam.

2. Arrangement according to Claim 1, characterized in that the actuator (20) of the driving gear is designed as a threaded shaft.

3. Arrangement according to Claims 1 and 2, characterized in that, on both sides, at the end of the thread, the threaded shaft has a radial guiding groove (21).

4. Arrangement according to Claims 1 to 3, characterized in that a guiding part (22) connected to the recorder chassis engages in the actuator (20).

## Revendications

1. Dispositif pour un appareil vidéo à bande magnétique, pour réaliser, en cas de besoin, l'entraînement, le débranchement ou la commutation d'éléments de commande, qui contiennent des éléments (5, 6, 9) de guidage de la bande, et dans lequel les éléments de commande peuvent être entraînés au moyen d'un élément d'entraînement, qui est constitué par un disque de commande (4) monté de manière à pouvoir tourner sur une trajectoire annulaire autour du tambour porte-têtes, par un moteur d'entraînement (12) dans les deux sens de rotation, et dans lequel des premiers éléments (5, 6) de guidage de la bande, qui font partie desdits éléments de commande, sont disposés sur l'élément d'entraînement, et la bande magnétique est extraite d'une cassette au moyen des éléments de guidage de la bande et est appliquée, conformément à un guidage de piste oblique, partiellement autour d'un tambour porte-têtes rotatif, auquel sont associées des têtes magnétiques, caractérisé en ce que le dispositif comporte au moins un pignon d'entraînement (17), qui engrène avec le disque de commande (4) à denture intérieure ou extérieure, en ce que le pignon d'entraînement est amené en prise avec le disque de commande et en est écarté, sous l'effet d'un déplacement axial, et est maintenu, en position hors prise, dans une position prédéterminée par raport au disque de commande, en ce que le pignon d'entraînement engrène directement, ou par l'intermédiaire d'au moins un pignon intermédiaire, avec un levier pivotant (15), sur lequel est installé au moins un autre (9) des éléments de commande en ce que le pignon d'entraînement comporte, pour le déplacement axial, un organe de réglage (20) servant à provoquer le déplacement axial du pignon d'entraînement au moyen d'une rotation du disque de commande lui-même, et qu'il est prévu des moyens (23), accouplés au disque de commande pour déplacer le pignon d'entraînement à partir de la position prédéterminée pour l'amener à engrener avec le disque de commande.

2. Dispositif suivant la revendication 1, caractérisé par le fait que l'organe de réglage (20) du pignon d'entraînement est réalisé sous la forme d'une tige filetée.

3. Dispositif selon les revendications 1 et 2, caractérisé en ce que la tige filetée comporte des deux côtés, à l'extrémité du filetage, une gorge radiale de guidage (21).

4. Dispositif selon les revendications 1 à 3, caractérisé en ce qu'une pièce de guidage (22) reliée au châssis de l'appareil s'engage dans l'organe de réglage (20).

# FIG.1

# FIG. 2

# FIG. 3